# EUROPEAN PATENT SPECIFICATION

(11) **EP 3 657 148 B1**
(45) Date of publication and mention of the grant of the patent: **28.02.2024**
(21) Application number: 18207200.9
(22) Date of filing: 20.11.2018
(51) Int. Cl.: G01M 5/00, G01N 3/06

(54) **A SENSOR FOR DETERMINING FATIGUE LIFETIME OF A WELDED JOINT OF A STRUCTURE**
SENSOR ZUR BESTIMMUNG DER ERMÜDUNGSLEBENSDAUER DER SCHWEISSVERBINDUNG EINER STRUKTUR
CAPTEUR POUR LA DÉTERMINATION D'UNE DURÉE DE VIE EN FATIGUE D'UN JOINT DE SOUDURE D'UNE STRUCTURE

(43) Date of publication of application: 27.05.2020
(73) Proprietor: Damen 40 B.V., 4200 AA Gorinchem (NL)
(72) Inventor: Huiskamp, Ewoud, 2623 MK Delft (NL)
(74) Representative: De Vries & Metman

(56) References cited:
- US-A- 4 409 841
- US-A- 4 639 997
- US-A1- 2004 216 530
- PRZESTACKI D ET AL: "Surface roughness analysis after laser assisted machining of hard to cut materials", JOURNAL OF PHYSICS: CONFERENCE SERIES, INSTITUTE OF PHYSICS PUBLISHING, BRISTOL, GB, vol. 483, no. 1, 28 March 2014 (2014-03-28), page 12019, XP020259349, ISSN: 1742-6596, DOI: 10.1088/1742-6596/483/1/012019 [retrieved on 2014-03-28]

## Description

The present invention relates to a sensor for determining fatigue lifetime of a welded joint of a structure.

A fatigue process in a structure starts with microscopic imperfections or defects. Under certain circumstances, the microscopic imperfections rapidly grow and form a macroscopic defect in the form of a crack. The growth and propagation of a macroscopic crack leads to a fatigue failure. Since the appearance of such a macroscopic crack may occur relatively late in the fatigue process, depending on the level of the load cycle, there are sensors for providing an indication of the progression of fatigue damage within a structure in order to estimate the remaining service life of the structure. Such a sensor may provide a warning of impending fatigue failure so as to minimize the possibility of catastrophic consequences or costly repair of damage caused by a fatigue process. For example, US 4,639,997 is related to a sensor in the form of a coupon which is tailored to experience fatigue failure at a portion of the expected life of the structural member being monitored. The applicant has discovered that the known sensor is not suitable for all kind of structures, in particular in case of welded joints, for example in aluminium parts of ships.

US 2004/216530 is related to an apparatus and method for measuring the fatigue strength and fatigue damage of structures and predicting the service life remaining in the structure being tested. The apparatus is a specially designed fatigue gauge that contains breakable ligaments of either variable length to measure fatigue strength or fatigue damage of metallic, polymeric and composite materials or the same length but different composition to measure the fatigue strength and fatigue damage of certain composite materials.

US 4 409 841 is related to a fatigue damage indicator which includes a thin plate mounted between or integral with two members to which a stress is to be applied, the disposition of the two members being such that the thin plate is stressed in shear. Slots extending in the direction of the applied stress may be provided to ensure that cracks formed by fatigue stress propagate in a desired direction and the crack propagation is designed to ensure that a part of the plate becomes detached or is bent substantially away.

PRZESTACKI D ET AL: "Surface roughness analysis after laser assisted machining of hard to cut materials", JOURNAL OF PHYSICS: CONFERENCE SERIES, INSTITUTE OF PHYSICS PUBLISHING, BRISTOL, GB, val. 483, no. 1, 28 March 2014, page 12019 is related to surface roughness analysis after laser assisted machining of hard to cut materials.

An object of the invention is to provide structure, for example a ship, comprising a metal body including a welded joint and a sensor for determining fatigue lifetime of the welded joint, wherein the sensor is mounted to the body at or close to the welded joint, as defined in claim 1.

It is noted that the roughness Ra is a common standard roughness parameter that can be determined by a well-known measurement device.

According to the claimed invention, the notch has a V-shape including a notch angle which is larger than 90°, preferably between 130 and 140°. For example, a notch angle of 135° appears to simulate a weld slope angle quite accurately.

The notch may be made by laser cutting in order to obtain said surface roughness and/or the incision may be made by means of a laser beam. Laser cutting a plate material allows the sensor to be manufactured at low cost, since the surface of the bottom portion of the notch does not require an additional surface treatment. In case of manufacturing the incision the dimensions thereof can be set accurately. Nevertheless, alternative appropriate cutting methods are conceivable.

Preferably, the sensor has a thickness in the range of 0.25-10 mm as measured perpendicular to the main plane, since such a relative thick sensor maximizes corresponding material behaviour with the structure to which it is applied. The thickness of the sensor may be larger than 2 mm and the plate may be elongate having a length of 200 mm and a width of 50 mm, for example. The sensor thickness may also be larger than 3 mm or 5 mm. Typically in ships such relatively large sensors are allowable, since in general there is sufficient space in comparison to airplanes for example. Another advantage of the relatively large sensor dimensions is that a full fracture of the sensor can be easily detected by human eyes, for example during a monthly inspection.

In a practical embodiment the notch is a first notch and the sensor is provided with a second notch at an opposite side edge of the plate, wherein the first and second notches are similar.

The plate may be made of aluminium, but alternative metals are conceivable. Furthermore, the plate may be free from welded portions; for example, it may be made of a continuous plate material.

The sensor may be glued to the body across the entire surface of the sensor extending parallel to the main plane. It may be glued by using spacer tape which guarantees a controlled bonding thickness or fixed distance between the sensor and the body, for example 0.5 mm. It is also conceivable to partially bond the sensor to the body.

The sensor and the body may be made of the same material in order to maximize corresponding material behaviour with the body to which it is applied.

The selection may be made by selecting a certain thickness of the plate or a certain smallest width between the notches.

It is possible to apply more than one sensor on the body in order to provide more statistical data for accurately predicting residual lifetime.

The invention will hereafter be elucidated with reference to very schematic drawings showing embodiments of the invention by way of example.
Fig. 1 is a perspective view of an embodiment of a sensor according to the invention.
Fig. 2 is an enlarged top view of a portion of the embodiment of Fig. 1, indicated by II in Fig. 1.

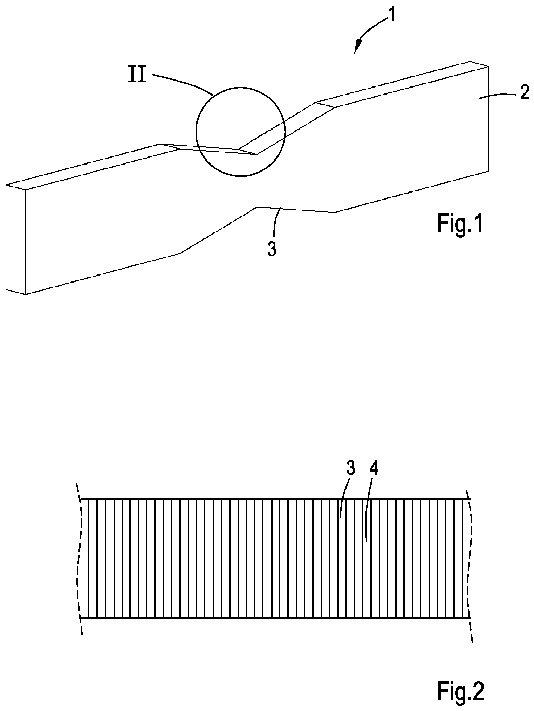

Fig. 1 shows an embodiment of a sensor 1 according to the invention. The sensor 1 is suitable for estimating the fatigue life of a structure including a welded joint, for example a structure of aluminum or steel (not shown) working under cyclic loads, such as a ship. The sensor 1 can be mounted close to the welded joint in such a structure. The sensor 1 comprises a flat rectangular plate 2 which extends in a main plane. It has a thickness between 0.25 and 10 mm, a length of about 200 mm and a width of about 50 mm, but different dimensions are conceivable.

The sensor 1 has two opposite longitudinal side edges, each having a macroscopic V-shaped notch 3 having a notch angle of about 135°. In the embodiment as shown in Fig. 1 the sensor 1 has a plane of symmetry which extends in longitudinal direction of the sensor 1 and perpendicular to the main plane. The smallest width of the sensor 1 between both notches 3 is 25 mm, but different dimensions are conceivable.

The sensor 1 is cut out of a plate material by means of laser cutting. This results in a microscopically grooved surface structure having elongate grooves 4 which extend in transverse direction of the main plane. The laser cutting parameters are selected such that at least at bottom portions of the notches 3 at a location where the distance between the notches 3 is the smallest the grooved surface has a surface roughness Ra in longitudinal direction of the side edges, which lies in a range of 1-12 µm. A microscopic groove at that location functions as a microscopic defect, which initiates a fatigue crack under a certain cyclic load. It is noted that the surface roughness in a direction perpendicular to the main plane is smaller than in longitudinal direction of the side edges.

## Claims

1. A structure, for example a ship, comprising a metal body including a welded joint and a sensor (1, 101) for determining fatigue lifetime of the welded joint, wherein the sensor (1, 101) is mounted to the body at or close to the welded joint, **characterized in that** the sensor (1) comprises a plate (2) which extends in a main plane, wherein at least one side edge of the plate (2) is provided with a notch (3), wherein at least a bottom portion of the notch (2) at a location where it has its greatest depth is provided with a microscopically grooved surface structure having elongate grooves (4) which extend in transverse direction of the main plane such that its surface roughness Ra in longitudinal direction of the side edge is larger than 0.5 µm, or larger than 1 µm or larger than 2 µm and smaller than 15 µm, or smaller than 12 µm, or smaller than 10 µm, wherein the thickness of the sensor is more than 2% or more than 5% of the thickness of the body adjacent to the joint, wherein the notch (3) has a V-shape including a notch angle which is larger than 90°, preferably between 130 and 140°.

2. A structure according to claim 1, wherein the notch (3) is made by laser cutting in order to obtain said surface roughness.

3. A structure according to any one of the preceding claims, wherein the sensor (1) has a thickness in the range of 0.25-10 mm as measured perpendicular to the main plane, preferably larger than 2, 3 or 5 mm.

4. A structure according to any one of the preceding claims, wherein the notch (3) is a first notch and the sensor is provided with a second notch at an opposite side edge of the plate (2), and wherein the first and second notches (3) are similar such that the sensor (1) has a plane of symmetry which extends in longitudinal direction of the sensor (1) and perpendicular to the main plane.

5. A structure according to any one of the preceding claims, wherein the plate (2) is made of aluminium.

6. A structure according to any one of the preceding claims, wherein the plate (2) is free from welded portions.

7. A structure according to any one of the preceding claims, wherein the sensor (1) is glued to the body across the entire surface of the sensor (1) extending parallel to the main plane.

8. A structure according to any one of the preceding claims, wherein the sensor (1) and the body are made of the same material.

## Patentansprüche

1. Struktur, zum Beispiel ein Schiff, die einen Metallkörper mit einer Schweißnaht und einen Sensor (1, 101) zur Bestimmung der Ermüdungslebensdauer der Schweißnaht aufweist, wobei der Sensor (1, 101) an oder nahe der Schweißnaht an dem Körper montiert ist, **dadurch gekennzeichnet, dass** der Sensor (1) eine Platte (2) aufweist, die sich in einer Hauptebene erstreckt, wobei wenigstens ein Seitenrand der Platte (2) mit einer Kerbe (3) versehen ist, wobei wenigstens ein unterer Abschnitt der Kerbe (2) an einer Stelle, wo sie die größte Tiefe hat, mit einer mikroskopisch gerillten Oberflächenstruktur mit länglichen Rillen (4) versehen ist, welche sich in der Querrichtung der Hauptebene erstrecken, so dass ihre Oberflächenrauheit Ra in der Längsrichtung des Seitenrands größer als 0,5 µm oder größer als 1 µm oder größer als 2 µm und kleiner als 15 µm oder kleiner als 12 µm oder kleiner als 10 µm ist, wobei die Dicke des Sensors mehr als 2% oder mehr als 5% der Dicke des Körpers benachbart zu der Naht ist, wobei die Kerbe (3) eine V-Form mit einem Kerbwinkel, der größer als 90°, vorzugsweise zwischen 130 und 140° ist, hat.

2. Struktur nach Anspruch 1, wobei die Kerbe (3) durch Laserschneiden hergestellt ist, um diese Oberflächenrauheit zu erhalten.

3. Struktur nach einem der vorhergehenden Ansprüche, wobei der Sensor (1) senkrecht zu der Hauptebene gemessen eine Dicke im Bereich von 0,25 - 10 mm, vorzugsweise größer als 2, 3 oder 5 mm, hat.

4. Struktur nach einem der vorhergehenden Ansprüche, wobei die Kerbe (3) eine erste Kerbe ist und der Sensor an einem entgegengesetzten Seitenrand der Platte (2) mit einer zweiten Kerbe versehen ist, und wobei die erste und zweiten Kerben (3) ähnlich sind, so dass der Sensor (1) eine Symmetrieebene hat, die sich in der Längsrichtung des Sensors (1) und senkrecht zu der Hauptebene erstreckt.

5. Struktur nach einem der vorhergehenden Ansprüche, wobei die Platte (2) aus Aluminium hergestellt ist.

6. Struktur nach einem der vorhergehenden Ansprüche, wobei die Platte (2) frei von geschweißten Abschnitten ist.

7. Struktur nach einem der vorhergehenden Ansprüche, wobei der Sensor (1) über die gesamte Oberfläche des Sensors (1), die sich parallel zu der Hauptebene erstreckt, an den Körper verklebt ist.

8. Struktur nach einem der vorhergehenden Ansprüche, wobei der Sensor (1) und der Körper aus dem gleichen Material hergestellt sind.

## Revendications

1. Structure, par exemple un navire, comprenant un corps métallique incluant un raccord soudé et un capteur (1, 101) pour déterminer la durée de vie en fatigue du raccord soudé, dans laquelle le capteur (1, 101) est monté sur le corps au niveau du raccord soudé ou près de celui-ci, **caractérisée en ce que** le capteur (1) comprend une plaque (2) qui s'étend dans un plan principal, dans laquelle au moins un bord latéral de la plaque (2) est pourvu d'une encoche (3), dans laquelle au moins une partie fond de l'encoche (2) à un emplacement où elle présente sa plus grande profondeur est pourvue d'une structure de surface rainurée de façon microscopique présentant des rainures allongées (4) qui s'étendent dans une direction transversale du plan principal de telle sorte que sa rugosité de surface Ra dans la direction longitudinale du bord latéral est supérieure à 0,5 m, ou supérieure à 1 µm ou supérieure à 2 µm et inférieure à 15 µm, ou inférieure à 12 µm, ou inférieure à 10 µm, dans laquelle l'épaisseur du capteur fait plus de 2 % ou plus de 5 % de l'épaisseur du corps adjacent au raccord, dans laquelle l'encoche (3) présente une forme de V incluant un angle d'encoche qui est supérieur à 90°, de préférence entre 130 et 140°.

2. Structure selon la revendication 1, dans laquelle l'encoche (3) est réalisée par découpage au laser afin d'obtenir ladite rugosité de surface.

3. Structure selon l'une quelconque des revendications précédentes, dans laquelle le capteur (1) présente une épaisseur dans la plage de 0,25-10 mm telle que de mesurée perpendiculairement au plan principal, de préférence supérieure à 2, 3 ou 5 mm.

4. Structure selon l'une quelconque des revendications précédentes, dans laquelle l'encoche (3) est une première encoche et le capteur est pourvu d'une deuxième encoche au niveau d'un bord latéral opposé de la plaque (2), et dans laquelle les première et deuxième encoches (3) sont similaires de telle sorte que le capteur (1) présente un plan de symétrie qui s'étend dans la direction longitudinale du capteur (1) et perpendiculairement au plan principal.

5. Structure selon l'une quelconque des revendications précédentes, dans laquelle la plaque (2) est composée d'aluminium.

6. Structure selon l'une quelconque des revendications précédentes, dans laquelle la plaque (2) est dépourvue de parties soudées.

7. Structure selon l'une quelconque des revendications précédentes, dans laquelle le capteur (1) est collé au corps sur toute la surface du capteur (1) s'étendant parallèlement au plan principal.

8. Structure selon l'une quelconque des revendications précédentes, dans laquelle le capteur (1) et le corps sont composés du même matériau.
